Europäisches Patentamt

European Patent Office

Office européen des brevets

(11) Publication number: **0 424 079 A1**

## EUROPEAN PATENT APPLICATION

(21) Application number: 90311302.5

(51) Int. Cl.5: **B01D 45/16, B04C 3/06**

(22) Date of filing: 16.10.90

(30) Priority: 16.10.89 NO 894112

(43) Date of publication of application:
24.04.91 Bulletin 91/17

(84) Designated Contracting States:
DE DK FR GB GR IT SE

(71) Applicant: ELKEM TECHNOLOGY A/S
P.O. Box 4376 Torshov
N-0402 Oslo 4(NO)

(72) Inventor: Basen, Toralv
Hamangskogen 75
N-1300 Sandvika(NO)
Inventor: Ephithite, Robin John
Lislebyveien 40
N-1600 Fredrikstad(NO)

(74) Representative: Rees, David Christopher et al
Kilburn & Strode 30 John Street
London WC1N 2DD(GB)

(54) Device for separating solid particles from a fluid.

(57) A device for separating particles from a gas, comprising a cylindrical or conical chamber (1), having an outlet opening (2) for gas in its upper end and at least one outlet opening (3,4) for solid particles in its lower end. A cylindrical pipe (5) is concentrically arranged inside the chamber (1). The pipe (5) is closed in its upper end and its open lower end extends through the bottom of the chamber (1). The pipe )5) has in its sidewall a substantially rectangular opening which continues in a spiral which runs about a part of the circumference of the pipe.

Fig 1

EP 0 424 079 A1

## DEVICE FOR SEPARATING SOLID PARTICLES FROM A FLUID

The present invention relates to a device for separating solid particles from a fluid, especially gasses.

A large number of devices for separating solid particles from fluids are known, such as cyclons, radiclones etc. These known devices have, however, a number of disadvantages such as their large size and a number of changes of direction of the flow of gas through them. As a result, when these known devices are to be used at high temperatures their design makes it difficult to provide them with refractory linings having a long life-time.

It is an object of the present invention to provide a device for separating solid particles from a fluid and particularly for separating solid particles from a gas, which device is very simple and very trustworthy in operation and consist of parts which can easily be replaced.

Accordingly, the present invention provides a device for separating solid particles from a fluid, especially a gas, which comprises a cylindrical or conical chamber having an outlet for gas at its upper end and at least one outlet opening for solid particles in its lower end and a cylindrical pipe concentrically arranged inside the chamber, characterised in that the pipe is closed at its upper end and has an outlet opening at its lower end for a mixture of particles and fluid, the lower end of the pipe extending through the bottom of the chamber, the pipe having in its sidewall a substantially rectangular opening which continues in a spiral running about at least a part of the circumference of the pipe.

Preferably the spiral runs at least 1/4 of the way about the circumference of the pipe, and more preferably the spiral runs 3/4 of the way about the circumference of the pipe.

The device according to the present invention is very simple and effective. By use of the device according to the present invention a degree of separation of solid particles above 98% may be achieved. The device according to the present invention has the further advantage that the main flow direction of the fluid is not changed as the inlet opening for a mixture of gas and solid particles extends in the same direction as the outlet opening for gas in the cylindrical or conical chamber. This means that the device according to the present invention can very easily fit for example into a vertical column for gas reduction of metal oxide particles. Furthermore, virtually all wear will take place in the cylindrical pipe and in the spiral. These parts can very easily be replaced. The device according to the present invention is very well suited for use at high temperatures, as all parts of the device can be made from, or lined with, high temperature resistant materials. Finally, the device according to the present invention has no moving parts.

The invention may be carried into practice in various ways and one embodiment will now be further described by way of example with reference to the accompanying drawings in which:

Figure 1 is a vertical section through a device according to the present invention, and,

Figure 2 is a section along line I-I in Figure 1.

As shown in the drawings, the device comprises a cylindrical chamber 1 which has in its upper end an outlet for opening 2 for gas and in its lower end outlet openings 3, 4 for separated solid particles. A cylindrical pipe 5 extends upwards inside the chamber 1 from below the bottom of the chamber 1. The pipe 5 is concentrically arranged in the chamber 1 and is closed in its upper end while it is open in its lower end 6, which extends below the bottom of the chamber 1. The lower end 6 of the pipe 5 thus forms an inlet opening for the mixture of solid particles and gas.

The pipe 5 has in its sidewall a rectangular opening 7 which extends from above the bottom of the chamber 1 upwards against the upper end of the pipe 5. From the rectangular opening 7 there is arranged a so-called "Archimedean spiral" 8 in the form of a wall which runs about 3/4 of the way around the circumference of the pipe 5 and ends in a rectangular outlet opening 9. Although the illustrated embodiment shows an "Archimedean spiral" 8 which runs 3/4 of the way about the circumference of the pipe 5, it will be appreciated that it is within the scope of the present invention to use a spiral 8 which runs more or less than this extent. In order to achieve good results, the spiral 8, however, has to run at least 1/4 of the way about the circumference of the pipe 5.

By use of the device according to the present invention, the mixture of gas and solid particles is continuously supplied to the lower end of the pipe 5. The mixture runs through the pipe 5 and out through the opening 7. During passage of the mixture through the spiral 8, the solid particles will, due to the centrifugal force, follow the outer wall of the spiral 8. Thus at the outlet end 9 of the spiral 8, the particles and the gas will be separated. The particles will be thrown against the wall in the chamber 1 and flow downwards along the wall, while the gas will move upwards to the outlet opening 2 in the top of the chamber 1. The particles flowing downwards along the wall of the chamber 1 are thereafter removed from the chamber 1 through the outlet openings 3 and 4, while the gas passes out via the outlet opening 2. The invention will now be further illustrated in the following non-limiting example.

EXAMPLE

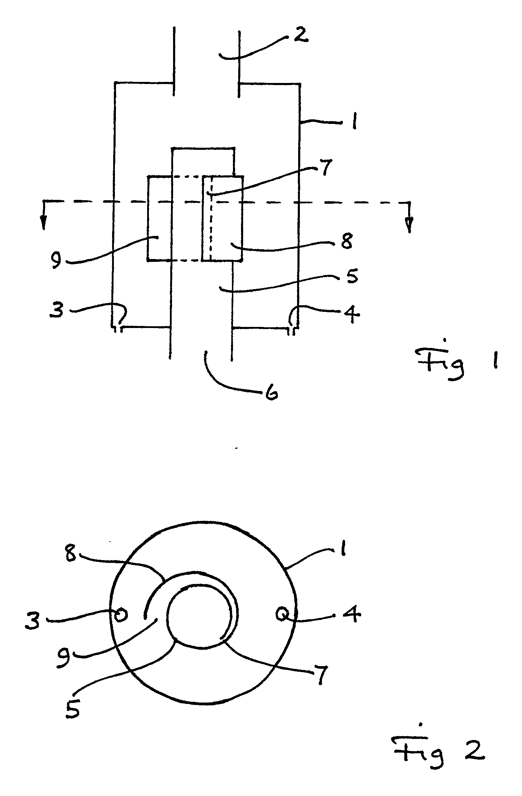

A device as described in Figures 1 and 2 was used to separate iron ore particles from air. The size of the iron ore particles was less than 200 microns. The test was carried out at room temperature. The test showed more than 98.5% of the particles in the mixture was separated from the air.

Claims

1. A device for separating solid particles from a fluid, especially a gas, which comprises a cylindrical or conical chamber (1) having an outlet opening (2) for gas at its upper end and at least one outlet opening (3,4) for solid particles in its lower end and a cylindrical pipe (5) concentrically arranged inside the chamber (1), characterised in that the pipe (5) is closed at its upper end and has an inlet opening (6) at its lower end for a mixture of particles and fluid, the lower end of the pipe (5) extending through the bottom of the chamber (1), the pipe (5) having in its sidewall a substantially rectangular opening (7) which continues in a spiral (8) running about at least a part of the circumference of the pipe (5).

2. A device as claimed in Claim 1, characterised in that the spiral (8) runs at least 1/4 of the way around the circumference of the pipe (5).

3. A device as claimed in Claim 1 or Claim 2, characterised in that the spiral (8) runs 3/4 of the way around the circumference of the pipe (5).

Fig 1

Fig 2

European
Patent Office

EUROPEAN SEARCH
REPORT

Application Number

EP 90 31 1302

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 957 471 (Y. TAMACHI et al.)<br>* Complete document *<br>— — — | 1,2 | B 01 D<br>45/16<br>B 04 C 3/06 |
| A | DE-A-2 832 097 (MESSERSCHMITT-BÖLKOW-BLOHM GmbH)<br>— — — | | |
| A | DE-A-2 403 689 (BAYER AG)<br>— — — | | |
| A | US-A-3 792 573 (L.A. BORSHEIM)<br>— — — — — | | |

TECHNICAL FIELDS
SEARCHED (Int. Cl.5)

B 01 C
B 04 C

The present search report has been drawn up for all claims

| Place of search | Date of completion of search | Examiner |
|---|---|---|
| The Hague | 28 December 90 | PYFFEROEN K. |